# EUROPÄISCHE PATENTSCHRIFT

(11) **EP 3 552 812 B1**
(45) Veröffentlichungstag und Bekanntmachung des Hinweises auf die Patenterteilung: **07.06.2023**
(21) Anmeldenummer: 19164168.7
(22) Anmeldetag: 20.03.2019
(51) Int. Cl.: B30B 15/16, F15B 21/14

(54) **VERFAHREN ZUM BETRIEB EINES HYDRAULISCHEN SYSTEMS**
METHOD FOR OPERATING A HYDRAULIC SYSTEM
PROCÉDÉ DE FONCTIONNEMENT D'UN SYSTÈME HYDRAULIQUE

(30) Priorität: 10.04.2018 DE 102018108415
(43) Veröffentlichungstag der Anmeldung: 16.10.2019
(73) Patentinhaber: Siempelkamp Maschinen- und Anlagenbau GmbH, 47803 Krefeld (DE)
(72) Erfinder: Druyen, Markus, 47669 Wachtendonk (DE); Plate, Bernd, 47803 Krefeld (DE); Endberg, Gregor, 41334 Nettetal (DE); von Dombrowski, René, 51105 Köln (DE)
(74) Vertreter: Andrejewski - Honke Patent- und Rechtsanwälte Partnerschaft mbB

(56) Entgegenhaltungen:
- EP-A1- 2 036 711
- DE-A1-102009 052 531
- DE-A1-102013 114 040
- DE-A1-102014 005 352
- DE-A1-102014 107 118
- DE-A1-102014 109 152
- US-A- 5 794 438

## Beschreibung

Die Erfindung betrifft ein Verfahren zum Betrieb eines hydraulischen Systems, insbesondere einer hydraulischen Presse,
wobei das hydraulische System zumindest einen hydraulischen Verbraucher (z. B. einen oder mehrere Hydraulikzylinder), eine verstellbare Pumpe zur Versorgung des hydraulischen Verbrauchers mit einer Hydraulikflüssigkeit bzw. - fluid (z. B. Hydrauliköl), einen Elektromotor zum Antrieb der Pumpe und eine Steuerung für die Pumpe und den Elektromotor aufweist,
wobei sich das hydraulische System mit der Steuerung aus einer Betriebsphase über eine Abbremsphase in eine Stillstandsphase und aus dieser über eine Hochlaufphase in die Betriebsphase überführen lässt,
wobei die verstellbare Pumpe einerseits in einem Pumpenbetrieb mit veränderbarem Förderstrom und andererseits in einem reversierten Motorbetrieb betreibbar ist.

Bei einem hydraulischen System handelt es sich insbesondere um eine hydraulische Presse, welche elektrische Energie über Motor-Pumpeneinheiten (bestehend aus Elektromotor und verstellbarer Pumpe) in hydraulische Energie umwandelt, die wiederum über hydraulische Verbraucher, z. B. Aktuatoren, als Nutzenergie für Bewegungs- oder Umformvorgänge verwendet werden kann. Als hydraulische Verbraucher kommen in solchen hydraulischen Systemen (z. B. in Pressen) z. B. Hydraulikzylinder zum Einsatz. In der Praxis kommt es in hydraulischen Systemen bzw. beim Betrieb hydraulischer Systeme stets zu Stillstandzeiten in unterschiedlicher Ausprägung. Bei solchen Stillstandzeiten, in denen das hydraulische System nicht benötigt wird, kann es sich z. B. um Chargierzeiten, Werkzeugwechselzeiten oder allgemeine Pausenzeiten handeln. Beispielhaft kann es sich bei einem solchen hydraulischen System um eine hydraulische Presse, z. B. eine hydraulische Schmiedepresse handeln. Nach einer Pressenoperation, z. B. einer Schmiedeoperation, muss ein neues Werkstück in die Presse transportiert werden, z. B. durch einen Schmiedemanipulator aus einem Ofen transportiert werden, so dass die hydraulischen Verbraucher innerhalb dieses Systems während dieser Stillstandzeit nicht benötigt werden.

In der Praxis ist es bei konventioneller Ausgestaltung solcher Systeme üblich, dass die Elektromotoren der Motor-Pumpeneinheiten in diesen Stillstandzeiten kontinuierlich weiterlaufen und die angetriebenen Pumpen aus energetischen Gründen in einem drucklosen Umlauf betrieben werden oder das Fördervolumen der verstellbaren Pumpen auf ein Minimum reduziert, z. B. zurückgeschwenkt, wird. Da der Energiebedarf im Leerlauf bei einer solchen Betriebsweise relativ hoch ist, ist man in der Praxis dazu übergegangen, die Elektromotoren während der Stillstandzeiten auszuschalten, d. h. vom Netz zu trennen, und bei erneuten Betriebsanforderungen des Systems, z. B. der Presse, wieder anzuschalten/hochzufahren. Außerdem ist es bei Systemen mit mehreren Motor-Pumpeneinheiten bekannt, im Teillastbetrieb einzelne Einheiten separat abzuschalten, um die Antriebsleistung bedarfsgerecht zur Verfügung stellen zu können. Das Ausschalten von Motor-Pumpeneinheiten erfolgt dabei in der Regel durch eine Trennung der elektrischen Energieversorgung und ein anschließendes Austrudeln der rotierenden Massen von Elektromotor und Pumpe. Von besonderer Bedeutung ist dann in der Praxis jedoch der anschließende Hochlauf des Elektromotors bzw. der Pumpe und dazu sind verschiedene Vorgehensweisen bekannt.

Eine (maschinentechnisch) kostengünstige Variante der Beschleunigung eines Elektromotors auf seine Nenndrehzahl stellt die Direkteinschaltung des Elektromotors dar, denn in diesem Fall ist kein zusätzliches Equipment erforderlich. Vorteilhaft ist bei der Direkteinschaltung auch die sehr kurze Anlaufzeit des Motors. Nachteilig ist jedoch die hohe Belastung für das elektrische Netz, für den Elektromotor und für die elektrische Schalttechnik, da bei einer Direkteinschaltung sehr hohe Anlaufströme erforderlich sind. Aufgrund der hohen thermischen Belastungen des Elektromotors ist die herstellerseitig zugelassene Schalthäufigkeit bei einer Direkteinschaltung daher auf wenige Anlaufvorgänge pro Stunde begrenzt, wobei die Qualität der Elektromotoren die zugelassene Schalthäufigkeit maßgeblich beeinflusst. Auch im Bereich der Schalttechnik erfordert eine Direkteinschaltung aufgrund der hohen Ströme höherwertige Komponenten. Ein weiterer Nachteil bei Systemen mit mehreren Motor-Pumpeneinheiten besteht darin, dass die Motoren aufgrund der hohen Anlaufströme sequenziell und nicht parallel hochfahren müssen, um das elektrische Netz nicht zu überlasten. Die Zeit bis zum Erreichen der Betriebsbereitschaft der Anlage steigt damit proportional zur Anzahl der verbauten Elektromotoren.

Alternativ werden daher in der Praxis sogenannte Sanftanläufer verwendet. Diese sind zwar mit erhöhten Investitionskosten verbunden, ermöglichen jedoch einen sanfteren und bauteilschonenderen Anlauf. Über eine elektrische Leistungsbegrenzung reduzieren Sanftanläufer zwar den benötigten Anlaufstrom, dieses führt jedoch zu einer längeren Hochlaufdauer des Elektromotors. Auf diese Weise ist der Anlaufstrom zwar geringer als bei der Direkteinschaltung des Motors, jedoch immer noch vergleichsweise hoch. Auch die zugelassene Einschalthäufigkeit ist - so wie bei einer Direkteinschaltung - stark begrenzt und abhängig von der Qualität der Elektromotoren und der elektrischen Schalttechnik. Damit weisen die Sanftanläufer ähnliche Nachteile wie die Direkteinschaltung auf, jedoch in geringerer Ausprägung.

Als weitere Alternative wurde daher der Einsatz von Frequenzumrichtern für den Motorhochlauf vorgeschlagen, welche eine flexible Einstellung der Motordrehzahl ermöglichen. Damit lassen sich die Nachteile der Direkteinschaltung und der Sanftanläufer hinsichtlich der zulässigen Einschalthäufigkeit und des nötigen Anlaufstroms weitestgehend eliminieren. Da Frequenzumrichter jedoch technisch aufwendiger gestaltet sind als Sanftanläufer, sind höhere Investitionskosten erforderlich. Hinzu kommt, dass Frequenzumrichter eine begrenzte Lebensdauer aufweisen, so dass regelmäßig hohe Kosten für den Bauteilaustausch anfallen. Ferner können Frequenzumrichter nicht in Kombination mit jedem beliebigen Elektromotor eingesetzt werden, so dass höherwertige Elektromotoren mit Sonderisolationen verwendet werden müssen. Schließlich sind Frequenzumrichter wirkungsgradbehaftet, so dass ständige Verlustleistungen generiert werden und die Energieeinsparung, die durch Ausschalten in Stillstandzeiten realisiert werden kann, ganz oder teilweise durch die zusätzliche Verlustleistung im Produktionsbetrieb aufgezehrt wird.

Aus der US 4 707 644 ist ein hydraulisches Hilfsantriebssystem zum Starten von Elektromotoren bekannt. Dabei ist ein Hydraulikmotor über eine Kupplung mit der Motorwelle verbunden und beschleunigt den Elektromotor beim Startvorgang auf seine Zieldrehzahl bevor der Motor elektrisch zugeschaltet und die Kupplung zum Hydraulikmotor wieder gelöst wird. Durch dieses Startprinzip können nicht nur hohe Anlaufströme vermieden werden, auch die Einschalthäufigkeit ist nahezu unbegrenzt und Bauteillebenszeiten, z. B. von Lagern und Motorwindungen können gesteigert werden. Die benötigte hydraulische Energie zum Antreiben des Hydraulikmotors kann über eine Hydraulikpumpe oder über einen Hydraulikspeicher bereitgestellt werden, wobei der Hydraulikspeicher wiederum über eine Hydraulikpumpe oder über einen reversierenden Betrieb des Hydraulikmotors selbst befüllt werden kann. In der Praxis wird der Anlauf von Elektromotoren nach diesem Prinzip seit langem realisiert, z. B. bei großen Elektromotoren in Universalzerspanern aus dem Bereich der Holzwerkstoffindustrie. Nachteilig sind die erhöhten Investitionskosten durch das Hilfsantriebssystem.

Ein Verfahren zur Steuerung einer hydraulischen Presse der eingangs beschriebenen Art ist z. B. aus der EP 2 610 049 B1 bekannt. Das System weist eine Hauptpumpe auf, die in einer Betriebsphase bzw. im normalen Produktionsbetrieb durch einen Elektromotor angetrieben wird, wobei der Hauptelektromotor während einer Leerlaufphase der hydraulischen Presse abgeschaltet und am Ende der Leerlaufphase wieder eingeschaltet und auf eine vorbestimmte Drehzahl hochgefahren wird. Die Hauptpumpe kann zum Hochfahren des Hauptelektromotors in einen (reversierten) Antriebsmodus geschaltet werden, in dem sie von der sie durchströmenden Hydraulikflüssigkeit angetrieben wird und den Hauptelektromotor antreibt. Die hydraulische Energie wird dabei entweder durch eine Hilfspumpe oder eine zweite Hauptpumpe zur Verfügung gestellt. Es ist folglich entweder ein zweiter Antrieb oder ein Hilfsantrieb mit Hilfselektromotor und Hilfspumpe vorgesehen, mittels der Hydraulikflüssigkeit durch die Hauptpumpe gefördert wird, wobei der Hauptelektromotor bei Erreichen einer vorbestimmten Drehzahl mit elektrischer Energie versorgt und die Hauptpumpe in einen Pumpenmodus geschaltet wird. Nachteilig ist dabei, dass die in diesem System vorgesehenen einzelnen Motor-Pumpeneinheiten alleinstehend nicht funktionsfähig sind, sondern zur Bereitstellung der erforderlichen Hochlaufenergie wird stets eine Hilfspumpe oder eine zweite Hauptpumpe benötigt. Zum anderen muss die benötigte Hochlaufenergie des Systems vollständig von außen zugeführt werden, d. h. über die Elektromotoren von Hilfspumpen oder zweiter Hauptpumpe, so dass zusätzliche elektrische Energie benötigt wird. Alternativ wird in der EP 2 610 049 B1 im Übrigen auch vorgeschlagen, den hydraulischen Verbraucher selbst, z. B. ein Hydraulikzylinder in das Hochlaufkonzept einzubinden, indem z. B. die Verlagerung eines Stößels eines Zylinders in dem Zylinder Hydraulikflüssigkeit verdrängt und damit die Hauptpumpe durchströmt, die dadurch angetrieben wird. Auf diese Weise treibt die Hauptpumpe den Hauptelektromotor im Zuge des Hochfahrens an. Dies stellt jedoch eine direkte Kopplung der Antriebseinheit mit dem Verbraucher dar, so dass ein Hochlauf stets z. B. eine Zylinderbewegung benötigt. Das Dokument DE-A-102014109152 offenbart ein Verfahren nach dem Oberbegriff des Anspruchs 1 und ein System nach dem Oberbegriff des Anspruchs 6.

Der Erfindung liegt die Aufgabe zugrunde, ein Verfahren zum Betrieb eines hydraulischen Systems, insbesondere ein "Start-Stopp-Verfahren" bzw. ein Start-Stopp-System" zu schaffen, das sich durch geringe Investitionskosten und hohe Energieeffizienz unter Beibehaltung bisheriger Vorteile, wie z. B. geringer Anlaufstrom oder hohe Einschalthäufigkeit, auszeichnet. Das System soll für autarke Motor-Pumpeneinheiten ohne zusätzliche Hilfs- oder Hauptpumpen realisierbar sein.

Zur Lösung dieser Aufgabe lehrt die Erfindung bei einem eingangs beschriebenen Verfahren zum Betrieb eines hydraulischen Systems, bei welchem die verstellbare Pumpe einerseits in einem Pumpenbetrieb mit veränderbarem Förderstrom und andererseits in einem reversierten (Hydro- )Motorbetrieb betreibbar ist, dass (zum Erreichen der Stillstandsphase aus der Betriebsphase zunächst) in der Abbremsphase der Elektromotor abgeschaltet wird, z. B. von der elektrischen Energieversorgung getrennt wird, und die Pumpe im Pumpenbetrieb unter Ausnutzung der nach der Motorabschaltung noch in Motor und Pumpe enthaltenen kinetischen Energie einen Hydraulik-Speicher füllt, wobei in der Hochlaufphase die Pumpe im Motorbetrieb (als Hydromotor) über die aus dem Speicher in die Pumpe strömende Hydraulikflüssigkeit betrieben und damit den Elektromotor antreibt, wobei bei Erreichen eines vorgegebenen Zustandes des Elektromotors (z. B. bei einer Solldrehzahl) die Verbindung der Pumpe zum Speicher getrennt und der Elektromotor angeschaltet, d. h. mit der elektrischen Energieversorgung verbunden wird, so dass er die Pumpe (wieder) im Pumpenbetrieb antreibt.

Die Erfindung geht dabei zunächst einmal von der grundsätzlich bekannten Erkenntnis aus, dass es für einen energieeffizienten Betrieb eines hydraulischen Systems sehr vorteilhaft ist, den Elektromotor bzw. die Elektromotoren in Stillstandsphasen des hydraulischen Systems vollständig abzuschalten und bevorzugt vom Netz zu trennen. Darauf aufbauend hat die Erfindung erkannt, dass sich der aufgrund der Massenträgkeit der rotierenden Teile des Elektromotors und der Pumpe sowie des hohen Drehzahlniveaus das stromlos geschaltete System zum Ausschaltzeitpunkt einen hohen kinetischen Energiegehalt aufweist, der erfindungsgemäß zum Füllen eines Hydraulikspeichers genutzt wird, so dass diese gespeicherte Energie zu einem späteren Zeitpunkt zur Verfügung steht und insbesondere für die Hochlaufphase genutzt wird. Die verstellbare Pumpe wird folglich in der Hochlaufphase in grundsätzlich bekannter Weise in einem reversierten Hydromotorbetrieb betrieben, dabei jedoch nicht durch eine zusätzliche Hilfs- oder Hauptpumpe gespeist, sondern über den Hydraulikspeicher, so dass die zuvor im Zuge der Abbremsphase gespeicherte Energie sehr energieeffizient ausgenutzt wird. Das System zeichnet sich folglich durch hohe Energieeffizienz und niedrige Investitionskosten aus, da auf zusätzliche Antriebe (Motor-Pumpeneinheiten) für die Hochlaufphase verzichtet werden kann. Da folglich für den Hochlaufvorgang anteilig Energie genutzt wird, die zuvor im Zuge des Abbremsvorganges der Motor-Pumpeneinheit im Hydraulikspeicher gespeichert wurde, wird der Energiebedarf beim Hochlaufvorgang im Vergleich zu bekannten Lösungen mittels Hilfsaggregaten deutlich reduziert.

Zur Durchführung eines solchen Verfahrens wird ein hydraulisches System zur Verfügung gestellt, das zumindest einen hydraulischen Verbraucher (z. B. Hydraulikzylinder), eine verstellbare Pumpe zur Versorgung des hydraulischen Verbrauchers mit einer Hydraulikflüssigkeit, einen Elektromotor zum Antrieb der Pumpe und eine Steuerung für die Pumpe und den Elektromotor aufweist. Die verstellbare Pumpe ist einerseits in einem Pumpenbetrieb (mit veränderbarem Förderstrom) und andererseits in einem (reversierten) Motorbetrieb betreibbar. Dieses hydraulische System ist dadurch gekennzeichnet, dass ein (hydraulischer) Speicher vorgesehen ist, der über eine Ventileinrichtung mit der verstellbaren Pumpe verbunden ist bzw. verbunden werden kann. Bevorzugt ist diese Ventileinrichtung zwischen Pumpe einerseits und Verbraucher und Speicher andererseits angeordnet, so dass mit der Ventileinrichtung die Pumpe wahlweise mit dem Verbraucher oder mit dem Speicher verbindbar ist. Die Schaltlogik der Ventileinrichtung ist folglich so ausgebildet, dass die Pumpe wahlweise mit dem Verbraucher oder mit dem Speicher verbunden wird. Bei einer solchen Ventileinrichtung kann es sich z. B. um zumindest ein Wegeventil handeln, das z. B. zumindest ein 3-3-Wegeventil oder alternativ auch mehrere 2-2-Wegeventile aufweist bzw. als solches ausgebildet ist.

Verstellbare Pumpe meint im Rahmen der Erfindung eine Pumpe mit variabel einstellbarem Förderstrom bzw. Fördervolumenstrom, und zwar vorzugsweise bei kontinuierlichem bzw. konstantem Betrieb des Elektromotors, d. h. zur Einstellung des Förderstroms der Pumpe wird nicht der Motor eingestellt und insbesondere nicht die Motordrehzahl verändert, so dass der Motor insbesondere ohne Frequenzumrichter betrieben werden kann. Die Verstellung des Förderstroms erfolgt bei der Pumpe ohne Veränderung der Motordrehzahl durch grundsätzlich bekannte Maßnahmen, so dass auf grundsätzlich bekannte Pumpentypen zurückgegriffen werden kann. Bevorzugt ist die verstellbare Pumpe als Axialkolbenpumpe mit einstellbarem Schwenkwinkel zur Einstellung des Förderstroms ausgebildet. Dabei handelt es sich um eine Pumpe bzw. eine Pumpeneinheit, die sowohl im Pumpenbetrieb als auch im Motorbetrieb und folglich sowohl als Pumpe als auch als Hydromotor arbeiten kann.

Das hydraulische System weist außerdem bevorzugt eine Einrichtung zur Überwachung des Betriebszustandes des Elektromotors auf, z. B. einen Drehzahlsensor zur Messung der Motordrehzahl, wobei diese Einrichtung bzw. dieser Sensor mit der Steuerung des hydraulischen Systems verbunden ist. Ferner ist der Elektromotor bevorzugt über eine elektronische Schalteinrichtung mit der Steuerung verbunden, so dass der Elektromotor über die Schalteinrichtung abgeschaltet und angeschaltet und bevorzugt von der Energieversorgung bzw. vom Netz getrennt werden kann. Ferner weist das hydraulische System bevorzugt eine Druckmesseinrichtung auf, mit der der Speicherdruck des Speichers messbar ist, wobei diese Druckmesseinrichtung (z. B. Druckmesssensor) mit der Steuerung bevorzugt verbunden ist.

Weiterer Bestandteil eines solchen hydraulischen Systems ist üblicherweise ein Tank für die Hydraulikflüssigkeit, so dass das System über diesen Tank insgesamt gespeist wird.

In bevorzugter Weiterbildung des beschriebenen Verfahrens zum Betrieb eines hydraulischen Systems wird vorgeschlagen, dass in der Abbremsphase und/oder der Hochlaufphase die Drehzahl der Pumpe (z. B. mit der Messeinrichtung) und/oder der Speicherdruck des Speichers (z. B. mit einer Druckmesseinrichtung) gemessen wird bzw. gemessen werden, wobei vorzugsweise der Förderstrom der (verstellbaren) Pumpe in Abhängigkeit von der Drehzahl des Motors und/oder dem Speicherdruck gesteuert oder geregelt wird. So kann z. B. in der Abbremsphase über die Signale des Drehzahlsensors zur Erfassung der Motordrehzahl und des Drucksensors zur Erfassung des Drucksensors zur Erfassung des Speicherdruckes die Pumpe, z. B. dessen Schwenkwinkel, über die Steuerung während der Abbremsphase derart geregelt werden, dass eine optimale Umwandlung der kinetischen Energie der rotierenden Teile in eine potenzielle hydraulische Energie im Hydraulikspeicher erfolgt. In der Hochlaufphase kann mit Hilfe des Drehzahlsignals und des Speicherdrucks die Pumpe, z. B. deren Schwenkwinkel über die Steuerung derart geregelt werden, dass der Elektromotor unter optimaler Ausnutzung der Energiereserven im Hydraulikspeicher auf eine vorbestimmte Drehzahl (z. B. Nenndrehzahl) beschleunigt werden kann.

Über die beschriebene Ventileinrichtung kann in Verbindung mit der Steuerung ein einwandfreier Betrieb realisiert werden. So kann in der Abbremsphase mit der Ventileinrichtung die Pumpe mit dem Speicher verbunden werden und außerdem die Pumpe vom Verbraucher getrennt werden, und bei Erreichen der Stillstandsphase kann der Speicher von der Pumpe getrennt werden, so dass in der Stillstandsphase bevorzugt Speicher und Verbraucher von der Pumpe getrennt sind. Die Pumpe kann in diesem Fall auf Null geschwenkt werden.

Ferner besteht mit der Ventileinrichtung die Möglichkeit in der Hochlaufphase die Pumpe mit dem Speicher zu verbinden und die Verbindung der Pumpe zum Verbraucher zu trennen. Bei Erreichen einer vorgegebenen Solldrehzahl des Elektromotors kann der Speicher von der Pumpe getrennt und die Pumpe kann mit dem Verbraucher verbunden werden. Zugleich oder anschließend wird der Elektromotor angeschaltet, d. h. mit dem Netz verbunden, und die Pumpe wird im Pumpenbetrieb betrieben und versorgt den Verbraucher, z. B. die Zylinder einer hydraulischen Presse.

Optional besteht im Übrigen die Möglichkeit, dem beschriebenen Verfahren des Start-Stopp-Systems eine Phase zur Vorladung des Hydraulikspeichers vorzuschalten. Dazu ist optional vorgesehen, vor Beginn einer Abbremsphase zunächst in einer Speichervorladephase den Speicher (teilweise) zu füllen, indem der Elektromotor angeschaltet bleibt und die Pumpe im Pumpenbetrieb angetrieben wird, wobei der Speicher mit der Ventileinrichtung mit dem Speicher verbunden und von dem Verbraucher getrennt wird. Hintergrund ist die Überlegung, dass bei einem idealen verlustfreien System zwar die gesamte kinetische Bewegungsenergie der rotierenden Teile beim Abbremsvorgang in potentielle hydraulische Energie im Hydraulikspeicher umgewandelt werden kann und dass diese hydraulische Energie vom Betrag der benötigten kinetischen Energie entsprechen würde, um die Motor-Pumpeneinheit wieder auf ihre Ausgangsdrehzahl zu beschleunigen. Aufgrund der systeminternen Wirkungsgrade treten jedoch je nach Systemausführung unterschiedlich hohe energetische Verluste sowohl in der Abbremsphase als auch in der Hochlaufphase auf. Um für die Hochlaufphase ausreichende Energiereserven im Hydraulikspeicher zur Verfügung zu stellen, um damit die gewünschte Solldrehzahl zu erreichen, kann optional dem beschriebenen Start-Stopp-Verfahren eine Speichervorladephase vorgeschaltet werden.

Das erfindungsgemäße hydraulische System weist in der beschriebenen Weise eine Steuerung auf, die von einer Datenverarbeitungsanlage gebildet oder mit einer Datenverarbeitungsanlage ausgerüstet sein kann. Diese Steuerung ist bevorzugt zur Durchführung des beschriebenen Verfahrens eingerichtet und folglich zur Durchführung des Verfahrens programmiert.

Im Folgenden wird die Erfindung anhand von lediglich Ausführungsbeispiele darstellenden Zeichnungen näher erläutert. Es zeigen
- **Fig. 1**: schematisch vereinfacht ein erfindungsgemäßes hydraulisches System und
- **Fig. 2**: eine abgewandelte Ausführungsform des Systems nach Fig. 1.

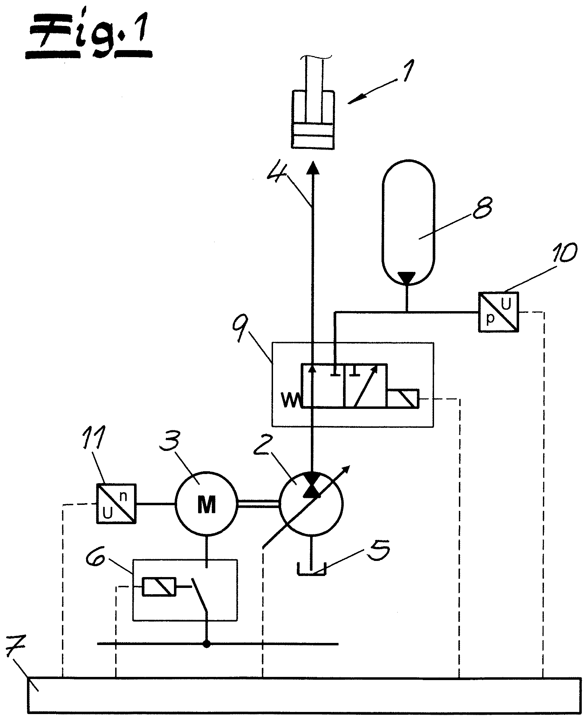

In Fig. 1 ist eine erste Ausführungsform eines hydraulischen Systems 1 dargestellt, bei dem es sich z. B. um eine hydraulische Presse oder um einen Teil einer hydraulischen Presse handeln kann. Dieses hydraulische System weist einen hydraulischen Verbraucher 1 auf, der z. B. als Hydraulikzylinder ausgebildet sein kann. Es können auch mehrere solcher hydraulischen Verbraucher, z. B. Hydraulikzylinder, vorgesehen sein. Ferner weist das hydraulische System eine Motor-Pumpeneinheit auf, die eine Pumpe 2 und einen Elektromotor 3 zum Antrieb der Pumpe 2 aufweist. Über die Verbindungsleitung 4 speist die Pumpe 2 bzw. die Motor-Pumpeneinheit 2, 3 den hydraulischen Verbraucher 1 mit Hydraulikflüssigkeit, die im System über einen Tank 5 zur Verfügung gestellt wird. Bei der Hydraulikflüssigkeit (bzw. dem Hydraulikfluid) handelt es sich bevorzugt um Hydrauliköl. Die Pumpe 2 ist als verstellbare Pumpe mit verstellbarem Förderstrom bzw. Fördervolumenstrom ausgebildet. Außerdem ist die Pumpe 2 sowohl im Pumpenbetrieb als auch in einem reversierten Motorbetrieb betreibbar. Es kann sich z. B. um eine verstellbare Axialkolbenpumpe handeln. Der Elektromotor 3, der die Pumpe 2 im Pumpenbetrieb antreibt, ist mit einer elektronischen Schalteinrichtung 6 verbunden. Zentraler Bestandteil des Systems ist im Übrigen eine Steuerung 7, die mit der Pumpe 2 und dem Motor 3 bzw. des Schalteinrichtung 6 steuerungstechnisch verbunden ist.

In einer Betriebsphase treibt der Motor 3 die Pumpe 2 an, die Hydraulikflüssigkeit über die Verbindungsleitung 4 zu dem Verbraucher 1 pumpt. Das System ist mit der Steuerung 7 aus der Betriebsphase über eine Abbremsphase in eine Stillstandsphase und aus dieser Stillstandsphase wiederum über eine Hochlaufphase in die Betriebsphase überführbar. Dabei wird der Elektromotor 3 in der Stillstandsphase abgeschaltet und im Ausführungsbeispiel mit der Schalteinrichtung 6 vom Netz getrennt, z. B. in Stillstandzeiten, in denen das hydraulische System nicht benötigt wird. Im Falle einer Presse kann es sich z. B. um Chargierzeiten, Werkzeugwechselzeiten oder allgemeine Pausenzeiten handeln. Besondere Bedeutung kommt im Rahmen der Erfindung einerseits der Abbremsphase und andererseits der Hochlaufphase mit dem erfindungsgemäßen Start-Stopp-System zu.

Zu diesem Zweck ist das System mit einem hydraulischen Speicher 8 ausgerüstet, der über eine Ventileinrichtung 9 mit der Pumpe 2 verbunden ist. Die Ventileinrichtung kann z. B. ein Wegeventil, z. B. ein 3-3-Wegeventil oder mehrere 2-2-Wegeventile aufweisen bzw. als solches ausgebildet sein. Ferner sind im Ausführungsbeispiel eine Einrichtung zur Überwachung des Betriebszustandes des Elektromotors 3 in Form eines Drehzahlsensors 11 und eine Druckmesseinrichtung 10 vorgesehen, wobei mit der Druckmesseinrichtung 10 der Speicherdruck im Speicher 8 messbar ist. Die Druckmesseinrichtung 10, der Drehzahlsensor 11 und die Ventileinrichtung 9 sind ebenfalls mit der (zentralen) Steuerung 7 des Systems verbunden.

Das erfindungsgemäße System zeichnet sich nun dadurch aus, dass - ausgehend von einer Betriebsphase - zum Erreichen einer Stillstandsphase zunächst in einer Abbremsphase der Elektromotor 3 abgeschaltet wird, z. B. vom Netz getrennt wird und die Pumpe 2 im Pumpenbetrieb unter Ausnutzung der nach der Motorabschaltung noch in Motor 3 und Pumpe 2 enthaltenen kinetischen Energie den Speicher 8 mit Hydraulikflüssigkeit füllt. Die auf diese Weise gespeicherte Energie lässt sich in der Hochlaufphase wieder rückgewinnen, indem in der Hochlaufphase die Pumpe 2 im (reversierten) Motorbetrieb über die aus dem Speicher 8 in die Pumpe 2 strömende Hydraulikflüssigkeit betrieben und damit der Elektromotor 3 angetrieben wird. Damit wird in dem Hochlaufvorgang des Elektromotors teilweise Energie genutzt, die zuvor beim Abbremsvorgang der Motor-Pumpeneinheit 2, 3 im Hydraulikspeicher 8 gespeichert wurde, und zwar ohne den Einsatz von Hilfspumpen oder Hilfsmotoren.

Im Einzelnen lässt sich das dargestellte System z. B. wie folgt betreiben:
Ausgehend von der Betriebsphase lässt sich zur Einleitung der Abbremsphase zunächst der Fördervolumenstrom der Pumpe 2 über die Steuerung 7 auf Null verstellen, um keine hydraulische Energie mehr in das nachgeschaltete System und insbesondere den Verbraucher 1 einzutragen und das Lastmoment auf den Elektromotor 3 auf ein Minimum zu reduzieren. Über die Ventileinrichtung 9 wird die Pumpe 2 nun mit dem Hydraulikspeicher 8 verbunden und die Verbindung der Pumpe 2 zu dem Verbraucher 1 über die Leitung 4 wird abgesperrt. Außerdem schaltet die Steuerung 7 über die Schalteinrichtung 6 den Elektromotor 3 ab, indem sie ihn bevorzugt von der Energieversorgung abtrennt. Damit wird vom Elektromotor 3 keine Energie mehr aus dem elektrischen Netz entnommen, so dass gegenüber einem aus der Praxis bekannten Leerlaufbetrieb der Motorpumpeneinheit in der Stillstandsphase der Energieverbrauch deutlich reduziert wird.

Aufgrund der Massenträgheit der rotierenden Teile des Elektromotors 3 und der Pumpe 2 und aufgrund des hohen Drehzahlniveaus weist das stromlos geschaltete System zum Ausschaltzeitpunkt des Elektromotors 3 nach wie vor einen hohen kinetischen Energiegehalt auf. Dieser wird in den Speicher 8 eingetragen. Denn durch eine Erhöhung des Schwenkwinkels der Pumpe 2 in Richtung Pumpenbetrieb stützt die Pumpe 2 sich über die zwischen Pumpe 2 und Speicher 8 befindliche Fluidsäule auf dem Speicher 8 ab und füllt diesen.

Das so entstehende Lastmoment an der Pumpe 2 bremst die rotierenden Teile der Pumpe 2 und des Elektromotors 3 bis zum Stillstand. Die Betriebsparameter werden über den Drehzahlsensor 11 und den Drucksensor 10 überwacht und auf diese Weise kann mit der Steuerung 7 der Schwenkwinkel der Pumpe 2 während der Abbremsphase derart geregelt werden, dass eine optimale Umwandlung der kinetischen Energie der rotierenden Teile in eine potenzielle, hydraulische Energie im Hydraulikspeicher 8 erfolgt. Nach dem Abbremsvorgang und der Speicherung der kinetischen Energie als hydraulische Energie im Hydraulikspeicher 8 wird über das Ventil 9 die Pumpe 2 von dem Speicher 8 getrennt und die Pumpe 2 in Null geschwenkt. Je nach Systemausführung können auf diese Weise während der Abbremsphase mehr als 80 % der kinetischen Energie als nutzbare hydraulische Energie im Hydraulikspeicher 8 zwischengespeichert werden. An die Abbremsphase schließt sich die Stillstandsphase an, in der der Elektromotor 3 vom elektrischen Netz getrennt und der Hydraulikspeicher 8 über das Ventil 9 vom System abgesperrt ist. Das System benötigt auf diese Weise keine elektrische Energie in der Stillstandsphase und die aus der Abbremsphase gewonnene bzw. umgewandelte Energie steht bis zur nächsten Betriebsanforderung des hydraulischen Systems in dem Hydraulikspeicher 8 gespeichert zur Verfügung.

Sobald nach einer Stillstandsphase eine erneute Betriebsanforderung an das hydraulische System gestellt wird, beginnt die Hochlaufphase des Systems bzw. der Motor-Pumpeneinheit. Dazu wird die Pumpe 2 über die Ventileinrichtung 9 mit dem Hydraulikspeicher 8 verbunden und die Verbindungsleitung 4 zu dem Verbraucher 1 des nachgeschalteten Systems wird über die Ventileinrichtung 9 abgesperrt. Durch eine Verstellung der Pumpe 2 in den reversierenden Betrieb wird diese in einem Motorbetrieb betrieben, um den zunächst stillstehenden Elektromotor 3 in der Hochlaufphase anzutreiben. Das während des Abbremsvorgangs in den Hydraulikspeicher 8 eingebrachte Fluidvolumen fließt in der Hochlaufphase vom Hydraulikspeicher 8 über die Ventileinrichtung 9 durch die Pumpe 2 in den Tank 5 und treibt so die Pumpe 2 im Motorbetrieb an, so dass der Elektromotor 3 angetrieben wird.

Dabei werden wiederum über den Sensor 11 und den Sensor 10 die Drehzahl des Motors und der Speicherdruck des Speichers 8 ermittelt und auf diese Weise kann der Schwenkwinkel der Pumpe 2 über die Steuerung 7 derart geregelt werden, dass der Elektromotor 3 unter optimaler Ausnutzung der Energiereserven im Hydraulikspeicher 8 auf eine vorbestimmte Drehzahl (z. B. Nenndrehzahl) beschleunigt wird. Nach Erreichen der Nenndrehzahl bzw. Solldrehzahl wird das Fördervolumen der Pumpe 2 auf Null verstellt und die Verbindung der Pumpe 2 zum Hydraulikspeicher 8 wird über die Ventileinrichtung 9 getrennt, so dass sich die Pumpe 2 in einem hydraulisch lastlosen Zustand befindet. Anschließend wird der Elektromotor 3 über die elektrische Schalteinrichtung 6 eingeschaltet und z. B. mit dem Stromnetz verbunden und mit elektrischer Energie beaufschlagt, so dass die Pumpe 2 nun wieder über den Elektromotor 3 angetrieben wird und das hydraulische System für die Betriebsphase betriebsbereit ist.

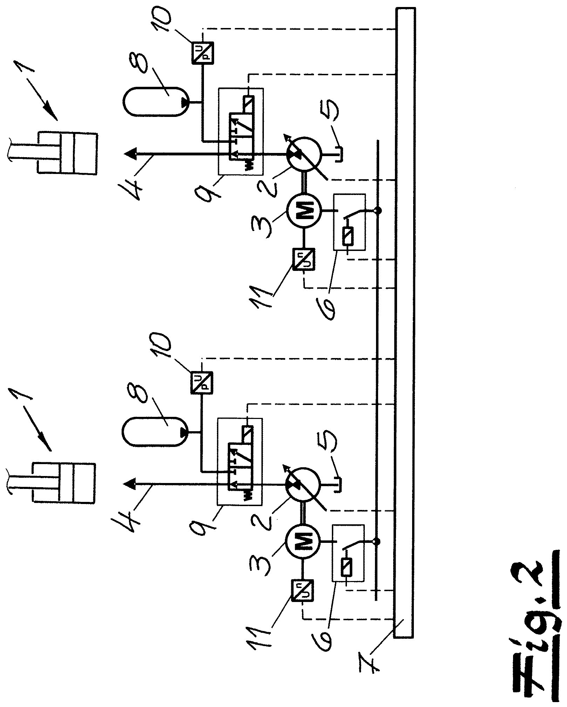

Fig. 2 zeigt eine abgewandelte Ausführungsform, bei der das System mit einer gemeinsamen Steuerung 7 mehrere Motor-Pumpeneinheiten 2, 3 aufweist, die jeweils eine Pumpe 2 und einen Motor 3 aufweisen. Die beiden Motor-Pumpeneinheiten sind z. B. identisch ausgebildet und jeweils mit einer einheitlichen Steuerung 7 verbunden. Jede der beiden Einheiten entspricht dabei im Wesentlichen der in Fig. 1 dargestellten Ausführungsform. Aufgrund des autarken Aufbaus dieser einzelnen Start-Stopp-Systeme können die einzelnen Motor-Pumpeneinheiten 2, 3 je nach Anforderung individuell entsprechend des zuvor beschriebenen Verfahrens abgeschaltet oder wieder hinzugeschaltet werden. Die Zuschaltung oder Abschaltung kann unabhängig voneinander erfolgen, so dass im Einzelfall nicht benötigte Motor-Pumpeneinheiten im Teillastbetrieb separat weggeschaltet werden können oder auch alle Motor-Pumpeneinheiten 2, 3 in Stillstandzeiten parallel zu- oder weggeschaltet werden können.

Optional besteht sowohl bei Fig. 1 als auch bei Fig. 2 die Möglichkeit, dem beschriebenen Verfahren des Start-Stopp-Systems eine Phase zur Vorladung des Hydraulikspeichers 8 vorzuschalten. Bei einem idealen verlustfreien System kann grundsätzlich die gesamte kinetische Energie der rotierenden Teile beim Abbremsvorgang in potentielle hydraulische Energie im Hydraulikspeicher 8 umgewandelt werden. Aufgrund der systeminternen Wirkungsgrade treten je nach Systemausführung jedoch unterschiedlich hohe energetische Verluste sowohl in der Abbremsphase als auch in der Hochlaufphase auf. Um innerhalb der Hochlaufphase ausreichende Energiereserven im Hydraulikspeicher 8 zur Verfügung zu stellen, um die gewünschte Solldrehzahl zu erreichen, kann dem Start-Stopp-Verfahren eine Speichervorladephase vorgeschaltet werden. Bei dieser Speichervorladephase ist die Pumpe 2 über die Ventileinrichtung 9 mit dem Hydraulikspeicher 8 verbunden. Der Elektromotor 3 ist mittels der elektrischen Schalttechnik 6 an das elektrische Netz geschaltet und treibt die Pumpe 2 an. Durch eine Erfassung des Speicherdrucks über den Sensor 10 und eine entsprechende Regelung des Pumpenschwenkwinkels über die Steuerung 7 kann eine gezielte Speichervorladung erfolgen, um Verluste der nachgeschalteten Abbrems- und Hochlaufphase zu kompensieren.

In einem konkreten Ausführungsbeispiel kann das hydraulische System als hydraulische Presse, z. B. als Schmiedepresse ausgebildet sein. Sobald nach erfolgter Schmiedeoperation ein neues Werkstück z. B. durch einen Schmiedemanipulator aus dem Ofen in die Presse transportiert werden kann, können mit der erfindungsgemäßen Vorgehensweise die Motor-Pumpeneinheiten 2, 3 bzw. nicht benötigte Motor-Pumpeneinheiten 2, 3 abgeschaltet werden, um auf diese Weise Energiekosten zu sparen, bis eine erneute Arbeitsanforderung an die Schmiedepresse gestellt wird. Dabei besteht jedoch die Möglichkeit, je nach Systemausführung Steuerdruckpumpen zu verwenden, die nicht in der erfindungsgemäßen Weise beschrieben werden, da diese die Energie für Schwenkwinkelverstellung der Hauptaggregate oder für die Ansteuerung mehrstufiger Ventile zur Verfügung stellen müssen. Hat der Schmiedemanipulator ein neues Werkstück an die Schmiedepresse eingebracht, können alle Motor-Pumpeneinheiten 2, 3 wieder parallel und energieeffizient gestartet werden und die gewünschte Schmiedeoperation der Presse kann eingeleitet werden. So können je nach Anteil an Stillstandzeiten enorme Energieeinsparungen realisiert werden, ohne dass eine Beschränkung der Pressenleistungsdaten oder ein Eingriff in Produktionsabläufe in Kauf genommen werden muss.

## Patentansprüche

1. Verfahren zum Betrieb eines hydraulischen Systems, insbesondere einer hydraulischen Presse,
wobei das hydraulische System zumindest einen hydraulischen Verbraucher (1), eine verstellbare Pumpe (2) zur Versorgung des hydraulischen Verbrauchers (1) mit einer Hydraulikflüssigkeit, einen Elektromotor (3) zum Antrieb der Pumpe (2) und eine Steuerung (7) für die Pumpe (2) und/oder den Elektromotor (3) aufweist,
wobei sich das hydraulische System mit der Steuerung (7) aus einer Betriebsphase über eine Abbremsphase in eine Stillstandsphase und aus dieser Stillstandsphase über eine Hochlaufphase in die Betriebsphase überführen lässt,
wobei die verstellbare Pumpe einerseits in einem Pumpenbetrieb mit veränderbarem Förderstrom und anderseits in einem reversierten Motorbetrieb betreibbar ist,
**dadurch gekennzeichnet, dass**
in der Abbremsphase der Elektromotor (3) abgeschaltet wird und die Pumpe (2) im Pumpenbetrieb unter Ausnutzung der nach der Motorabschaltung noch in Motor und Pumpe enthaltenen kinetischen Energie einen Speicher (8) füllt,
wobei in der Hochlaufphase die Pumpe (2) im reversierten Motorbetrieb über die aus dem Speicher (8) in die Pumpe (2) strömende Hydraulikflüssigkeit betrieben wird und damit den Elektromotor (3) antreibt,
wobei bei Erreichen eines vorgegebenen Zustandes des Elektromotors (3) die Verbindung der Pumpe (2) zum Speicher (8) getrennt und der Elektromotor (3) angeschaltet wird, so dass er die Pumpe (2) im Pumpenbetrieb antreibt.

2. Verfahren nach Anspruch 1, **dadurch gekennzeichnet, dass** in der Abbremsphase und/oder der Hochlaufphase die Drehzahl der Pumpe (2) und/oder der Speicherdruck des Speichers (8) gemessen wird/werden, wobei vorzugsweise der Förderstrom der Pumpe (2) in Abhängigkeit von der Drehzahl des Motors (3) und/oder dem Speicherdruck des Speichers (8) gesteuert oder geregelt wird.

3. Verfahren nach Anspruch 1 oder 2, **dadurch gekennzeichnet, dass** mit einer Ventileinrichtung (9) in der Abbremsphase die Pumpe (2) mit dem Speicher (8) verbunden und die Pumpe (2) vorzugsweise von dem Verbraucher (1) getrennt wird und bei Erreichen der Stillstandsphase der Speicher (8) von der Pumpe (2) getrennt wird.

4. Verfahren nach einem der Ansprüche 1 bis 3, **dadurch gekennzeichnet, dass** mit einer Ventileinrichtung (9) in der Hochlaufphase die Pumpe (2) mit dem Speicher (8) verbunden und die Verbindung zu dem Verbraucher (1) getrennt wird und das bei Erreichen einer vorgegebenen Solldrehzahl des Elektromotors (3) die Pumpe (2) von dem Speicher (8) getrennt und mit dem Verbraucher (1) verbunden wird, wobei vorzugsweise der Elektromotor (3) angeschaltet wird und die Pumpe (2) im Pumpenbetrieb zur Versorgung des Verbrauchers (1) betreibt.

5. Verfahren nach einem der Ansprüche 1 bis 4, **dadurch gekennzeichnet, dass** vor Beginn einer Abbremsphase zunächst in einer Speichervorladephase der Speicher (8) zumindest teilweise gefüllt wird, indem der Elektromotor (3) angeschaltet bleibt und die Pumpe (2) im Pumpenbetrieb antreibt, wobei die Pumpe (2) mit der Ventileinrichtung (9) mit dem Speicher (8) verbunden und von dem Verbraucher (1) getrennt ist.

6. Hydraulisches System, zur Durchführung des Verfahrens nach einem der Ansprüche 1 bis 5, mit zumindest
- einem hydraulischen Verbraucher (1),
- einer verstellbaren Pumpe (2) zur Versorgung des hydraulischen Verbrauchers (1) mit einer Hydraulikflüssigkeit,
- einem Elektromotor (3) zum Antrieb der Pumpe (2) und
- einer Steuerung (7) für die Pumpe (2) und/oder den Elektromotor (3),
wobei die verstellbare Pumpe (2) einerseits in einem Pumpenbetrieb mit veränderbarem Förderstrom und andererseits in einem reversierten Motorbetrieb betreibbar ist,
**dadurch gekennzeichnet, dass** ein hydraulischer Speicher (8) vorgesehen ist, der über eine Ventileinrichtung (9) mit der verstellbaren Pumpe (2) verbunden werden kann,
wobei in der Abbremsphase der Elektromotor (3) abschaltbar ist und mit der Pumpe (2) im Pumpenbetrieb unter Ausnutzung der nach der Motorabschaltung noch in Motor und Pumpe enthaltenen kinetischen Energie ein Speicher (8) füllbar ist,
wobei in der Hochlaufphase die Pumpe (2) im reversierten Motorbetrieb über die aus dem Speicher (8) in die Pumpe (2) strömende Hydraulikflüssigkeit betreibbar und damit der Elektromotor antreibbar ist,
und wobei bei Erreichen eines vorgegebenen Zustandes des Elektromotors (3) die Verbindung der Pumpe (2) zum Speicher (8) trennbar und der Elektromotor (3) anschaltbar ist, sodass er die Pumpe (2) im Pumpenbetrieb antreibt.

7. Hydraulisches System nach Anspruch 6, **dadurch gekennzeichnet, dass** die Ventileinrichtung (9) zwischen Pumpe (2) einerseits und Verbraucher (1) und Speicher (8) andererseits angeordnet ist, wobei mit der Ventileinrichtung (9) die Pumpe (2) wahlweise mit dem Verbraucher (1) und/oder dem Speicher (8) verbindbar ist.

8. Hydraulisches System nach Anspruch 6 oder 7, **dadurch gekennzeichnet, dass** die Ventileinrichtung (9) zumindest ein Wegeventil umfasst, z. B. ein 3-3-Wegeventil oder ein oder mehrere 2-2-Wegeventile.

9. Hydraulisches System nach einem der Ansprüche 6 bis 8, **dadurch gekennzeichnet, dass** die verstellbare Pumpe (2) als Axialkolbenpumpe mit einstellbarem Schwenkwinkel ausgebildet ist.

10. Hydraulisches System nach einem der Ansprüche 6 bis 9, **dadurch gekennzeichnet, dass** eine Einrichtung zur Überwachung des Betriebszustandes des Elektromotors (3) mit der Steuerung (7) verbunden ist, insbesondere ein Drehzahlsensor (11) zur Messung der Motordrehzahl.

11. Hydraulisches System nach einem der Ansprüche 6 bis 10, **dadurch gekennzeichnet, dass** der Elektromotor (3) über eine elektronische Schalteinrichtung (6) mit der Steuerung (7) verbunden ist.

12. Hydraulisches System nach einem der Ansprüche 6 bis 11, **dadurch gekennzeichnet, dass** die Steuerung (7) mit einer Druckmesseinrichtung (10) verbunden ist, mit der der Speicherdruck des Speichers (8) messbar ist.

13. Hydraulisches System nach einem der Ansprüche 6 bis 12, **dadurch gekennzeichnet, dass** die Steuerung (7) zur Durchführung des Verfahrens nach einem der Ansprüche 1 bis 5 eingerichtet ist.

14. Hydraulisches System nach einem der Ansprüche 6 bis 13, in der Ausführungsform als hydraulische Presse, z. B. hydraulische Schmiedepresse, mit zumindest einem als Hydraulikzylinder ausgebildeten hydraulischen Verbraucher (1).

## Claims

1. Method of operating a hydraulic system, more particularly a hydraulic press,
wherein the hydraulic system comprises at least one hydraulic consumer (1), an adjustable pump (2) for supplying the hydraulic consumer (1) with a hydraulic fluid, an electric motor (3) for actuating the pump (2) and a control (7) for the pump (2) and/or the electric motor (3),
wherein the hydraulic system with the control (7) can be transferred from an operating phase via a braking phase into standstill phase and from this standstill phase via a start-up phase into the operating phase,
wherein the adjustable pump is operable on the one hand in pump operation with a changeable flow rate and on the other hand in reverse motor operation,
**characterised in that**
in the braking phase, the electric motor (3) is switched off and the pump (2) in pumping operation fills a reservoir (8) utilising the kinetic energy still contained in the motor and pump after switching off the motor,
wherein in the start-up phase, the pump (2) in reverse motor operation is operated by the hydraulic fluid following out of the reservoir (8) into the pump (2) and thus actuates the electric motor (3),
wherein on reaching a predetermined status of the electric motor (3) the connection of the pump (2) to the reservoir (8) is severed and the electric motor (3) is switched on so that it operates the pump (2) in pumping operation.

2. Method according to claim 1, **characterised in that** in the braking phase and/or in the start-up phase, the speed of the pump (2) and/or the storage pressure of the reservoir (8) is/are measured, wherein preferably the flow rate of the pump (2) is controlled or regulated as a function of the speed of the motor (3) and/or the storage pressure of the reservoir (8).

3. Method according to claim 1 or 2, **characterised in that** in the braking phase the pump (2) is connected to the reservoir (8) with a valve device (9) and the pump (2) is preferably separated from the consumer (1) and on reaching standstill phase the reservoir (8) is separated from the pump (2).

4. Method according to any of claims 1 to 3, **characterised in that** in the start-up phase the pump (2) is connected to the reservoir (8) with a valve device (9) and the connection to the consumer (1) is severed, and that on reaching a predetermined target speed of electric motor (3), the pump (2) is separated from the reservoir (8) and connected to consumer (1), wherein preferably the electric motor (3) is switched on and operates the pump (2) in pumping operation to supply the consumer (1).

5. Method according to any one of claims 1 to 4, **characterised in that** before the start of the braking phase, in a reservoir pre-filling phase, the reservoir (8) is a least partially filled **in that** the electric motor (3) remains switched on and actuates the pump (2) in pumping operation, wherein the pump (2) is connected by way of the valve device (9) with the reservoir (8) and separated from the consumer (1).

6. Hydraulic system for implementing the method according to any one of claims 1 to 5 with at least
- a hydraulic consumer
- an adjustable pump (2) for supplying the hydraulic consumer (1) with a hydraulic fluid,
- an electric motor (3) for actuating the pump (2) and
- a control (7) for the pump (2) and/or the electric motor (3),
wherein the adjustable pump (2) on the one hand in pumping operation can be operated with a changeable flow rate and the other hand can be operated in reverse motor operation,
**characterised in that** a hydraulic reservoir (8) is provided, which can be connected to the adjustable pump (2) via a valve device (9),
wherein in the braking phase, the electric motor (3) can be switched off and with the pump (2) in pumping operation a reservoir (8) can be filled utilising the kinetic energy still contained in the motor and pump after switching off the motor,
wherein in the start-up phase, the pump (2) in reverse motor operation can be operated by the hydraulic fluid following out of the reservoir (8) into the pump (2) and thus the electric motor can be actuated,
and wherein on reaching a predetermined status of the electric motor (3) the connection of the pump (2) to the reservoir (8) can be severed and the electric motor (3) can be switched on so that it operates the pump (2) in pumping operation.

7. Hydraulic system according to claim 6, **characterised in that** the valve device (9) is arranged between the pump (2) on the one hand and consumer (1) and the reservoir on the other hand, wherein with the valve device (9) the pump (2) can be selectively connected to the consumer (1) and/or the reservoir (8).

8. Hydraulic system according to claim 6 or 7, **characterised in that** the valve device (9) comprises at least one directional valve, for example a 3-3-way valve or several 2-2-way valves.

9. Hydraulic system according to any one of claims 6 to 8, **characterised in that** the adjustable pump (2) is designed as an axial piston pump with adjustable swivel angle.

10. Hydraulic system according to any one of claims 6 to 9, **characterised in that** a device for monitoring the operating status of the electric motor (3), more particularly a speed sensor (11) for measuring the motor speed, is connected to the control (7).

11. Hydraulic system according to any one of claims 6 to 10, **characterised in that** the electric motor (3) is connected to the control (7) via an electronic circuit arrangement (6).

12. Hydraulic system according to any one of claims 6 to 11, **characterised in that** the control (7) is connected to a pressure measuring device (10), with which the storage pressure of the reservoir (8) can be measured.

13. Hydraulic system according to any one of claims 6 to 12, **characterised in that** the control (7) is set up to implement the method according to any one of claims 1 to 5.

14. Hydraulic system according to any one of claims 6 to 13 embodied as a hydraulic press, e.g. a hydraulic forging press, with at least one hydraulic consumer (1) configured as a hydraulic cylinder.

## Revendications

1. Procédé permettant de faire fonctionner un système hydraulique, en particulier une presse hydraulique,
sachant que le système hydraulique comporte au moins un élément consommateur hydraulique (1), une pompe réglable (2) pour alimenter l'élément consommateur hydraulique (1) en liquide hydraulique, un moteur électrique (3) pour entraîner la pompe (2) et une commande (7) pour la pompe (2) et/ou le moteur électrique (3),
sachant que le système hydraulique peut être transféré avec la commande (7) d'une phase de fonctionnement par une phase de ralentissement dans une phase d'arrêt et de cette phase d'arrêt par une phase d'accélération dans la phase de fonctionnement,
sachant que la pompe réglable peut être actionnée d'une part dans un fonctionnement de pompage avec un débit variable et d'autre part dans un fonctionnement motorisé inversé,
**caractérisé en ce que**
dans la phase de ralentissement, le moteur électrique (3) est arrêté et la pompe (2) en fonctionnement de pompage remplit un réservoir (8) en utilisant l'énergie cinétique encore contenue après l'arrêt du moteur dans le moteur et la pompe,
sachant que dans la phase d'accélération, la pompe (2) est actionnée en mode de fonctionnement motorisé inversé par le biais du liquide hydraulique s'écoulant du réservoir (8) dans la pompe (2) et entraîne de ce fait le moteur électrique (3),
sachant qu'en atteignant un état prédéfini du moteur électrique (3), la liaison de la pompe (2) au réservoir (8) est séparée et le moteur électrique (3) mis en marche de telle manière qu'il entraîne la pompe (2) en fonctionnement de pompage.

2. Procédé selon la revendication 1, **caractérisé en ce que** dans la phase de ralentissement et/ou la phase d'accélération, le régime de la pompe (2) et/ou la pression d'accumulation du réservoir (8) est/sont mesuré(s), sachant de préférence que le débit de la pompe (2) est commandé ou régulé en fonction du régime du moteur (3) et/ou de la pression d'accumulation du réservoir (8).

3. Procédé selon la revendication 1 ou 2, **caractérisé en ce qu'**avec un système de soupape (9), la pompe (2), dans la phase de ralentissement, est reliée au réservoir (8) et la pompe (2) est de préférence séparée de l'élément consommateur (1) et en atteignant la phase d'arrêt, le réservoir (8) est séparé de la pompe (2).

4. Procédé selon l'une quelconque des revendications 1 à 3, **caractérisé en ce qu'**avec un système de soupape (9), la pompe (2), dans la phase d'accélération, est reliée au réservoir (8) et la liaison avec l'élément consommateur (1) est séparée et **en ce qu'**en atteignant un régime théorique prédéfini du moteur électrique (3), la pompe (2) est séparée du réservoir (8) et est reliée à l'élément consommateur (1), sachant de préférence que le moteur électrique (3) est mis en marche et actionne la pompe (2) en mode de fonctionnement de pompage pour alimenter l'élément consommateur (1).

5. Procédé selon l'une quelconque des revendications 1 à 4, **caractérisé en ce qu'**avant le début d'une phase de ralentissement, le réservoir (8) est au moins en partie d'abord rempli dans une phase de préchargement de réservoir, le moteur électrique (3) restant en marche et entraînant la pompe (2) en mode de fonctionnement de pompage, sachant que la pompe (2) est reliée avec le système de soupape (9) au réservoir (8) et est séparée de l'élément consommateur (1).

6. Système hydraulique pour l'exécution du procédé selon l'une quelconque des revendications 1 à 5 avec au moins
- un élément consommateur hydraulique (1),
- une pompe réglable (2) pour alimenter l'élément consommateur hydraulique (1) en liquide hydraulique ,
- un moteur électrique (3) pour entraîner la pompe (2) et
- une commande (7) pour la pompe (2) et/ou le moteur électrique (3),
sachant que la pompe réglable (2) peut être actionnée d'une part dans un mode de fonctionnement de pompage avec un débit variable et d'autre part dans un mode de fonctionnement motorisé inversé,
**caractérisé en ce qu'**un réservoir hydraulique (8) est prévu, qui peut être relié par un système de soupape (9) à la pompe réglable (2),
sachant que dans la phase de ralentissement, le moteur électrique (3) peut être arrêté et un réservoir (8) peut être rempli avec la pompe (2) en mode de fonctionnement de pompage en utilisant l'énergie cinétique encore contenue dans le moteur et dans la pompe après l'arrêt du moteur,
sachant que dans la phase d'accélération, la pompe (2) peut être actionnée dans un mode de fonctionnement motorisé inversé par le liquide hydraulique s'écoulant du réservoir (8) dans la pompe (2) et le moteur électrique peut être de ce fait entraîné,
et sachant qu'en atteignant un état prédéfini du moteur électrique (3), la liaison de la pompe (2) au réservoir (8) peut être séparée et le moteur électrique (3) peut être mis en marche de telle manière qu'il entraîne la pompe (2) en mode de fonctionnement de pompage.

7. Système hydraulique selon la revendication 6, **caractérisé en ce que** le système de soupape (9) est disposé entre la pompe (2) d'une part et l'élément consommateur (1) et le réservoir (8) d'autre part, sachant que la pompe (2) peut être reliée avec le système de soupape (9) selon nécessité à l'élément consommateur (1) et/ou au réservoir (8).

8. Système hydraulique selon la revendication 6 ou 7, **caractérisé en ce que** le système de soupape (9) comprend au moins un distributeur à commande directionnelle, par ex. un distributeur à 3-3 voies ou un ou plusieurs distributeurs à 2-2 voies.

9. Système hydraulique selon l'une quelconque des revendications 6 à 8, **caractérisé en ce que** la pompe réglable (2) est constituée sous la forme d'une pompe à piston axial avec un angle de pivotement réglable.

10. Système hydraulique selon l'une quelconque des revendications 6 à 9, **caractérisé en ce qu'**un dispositif destiné à surveiller l'état de fonctionnement du moteur électrique (3) est relié à la commande (7), en particulier un capteur de régime (11) pour mesurer le régime du moteur.

11. Système hydraulique selon l'une quelconque des revendications 6 à 10, **caractérisé en ce que** le moteur électrique (3) est relié par un dispositif de connexion électronique (6) à la commande (7).

12. Système hydraulique selon l'une quelconque des revendications 6 à 11, **caractérisé en ce que** la commande (7) est reliée à un dispositif de mesure de pression (10) avec lequel la pression d'accumulation du réservoir (8) est mesurée.

13. Système hydraulique selon l'une quelconque des revendications 6 à 12, **caractérisé en ce que** la commande (7) est agencée pour exécuter le procédé selon l'une quelconque des revendications 1 à 5.

14. Système hydraulique selon l'une quelconque des revendications 6 à 13, dans la forme d'exécution en tant que presse hydraulique, par ex. : une presse à forger hydraulique, avec au moins un élément consommateur hydraulique (1) constitué sous la forme d'un vérin hydraulique.
